# EUROPEAN PATENT SPECIFICATION

(11) **EP 4 063 018 B1**
(45) Date of publication and mention of the grant of the patent: **04.09.2024**
(21) Application number: 20890230.4
(22) Date of filing: 01.07.2020
(51) Int. Cl.: B05B 7/06, B05B 7/08, F01N 3/08, F01N 3/20, F01N 3/10, B05B 7/00

(54) **NOZZLE AND HYDROLYZING DEVICE**
DÜSE UND HYDROLYSIERVORRICHTUNG
BUSE ET DISPOSITIF D'HYDROLYSE

(30) Priority: 19.11.2019 JP 2019208835
(43) Date of publication of application: 28.09.2022
(73) Proprietor: Hitachi Zosen Corporation, Osaka-shi, Osaka 559-8559 (JP)
(72) Inventor: MORI, Takuma, Osaka-shi, Osaka 559-8559 (JP); SHONO, Emi, Osaka-shi, Osaka 559-8559 (JP); TANAKA, Hironaka, Osaka-shi, Osaka 559-8559 (JP)
(74) Representative: Grünecker Patent- und Rechtsanwälte PartG mbB
(86) International application number: PCT/JP2020/025744
(87) International publication number: WO 2021/100236

(56) References cited:
- DE-A1- 102009 005 528
- DE-A1- 102009 034 072
- JP-A- 2002 066 393
- JP-A- 2004 033 840
- JP-A- 2004 195 335
- JP-A- 2011 117 386
- JP-A- 2019 027 347
- JP-A- H0 760 333
- US-A1- 2012 317 963
- US-B2- 10 473 013
- US-B2- 9 995 194
- ANONYMOUS: "Section C. Hollow-cone Pattern Nozzles", 31 October 2018 (2018-10-31), Japan, pages C1 - C14, XP009536336, Retrieved from the Internet <URL:https://everloy-spray-nozzles.com/product> [retrieved on 20220603]

## Description

### Technical Field

The present invention relates to a nozzle and a hydrolyzing device.

### Background Art

There is a conventionally-known system for cleaning emissions by decomposing nitrogen oxides contained in the emissions into nitrogen and water through a selective catalytic reduction (SCR) using, as a reducing agent, ammonia (NH₃) obtained by hydrolyzing an aqueous urea solution. What is being demanded in such a system is an improvement in the efficiency of a hydrolysis reaction of an aqueous urea solution to form ammonia by spraying the catalyst with the aqueous urea solution.

A variety of nozzles for misting a liquid over a spray target object are put into practical use. For example, Patent Literature 1 discloses a fluid spray nozzle having two orifices disposed parallel to each other in a width direction thereof and for spraying a fluid from each of the orifices.

### Citation List

### [Patent Literature]

[Patent Literature 1] Japanese Patent Application Publication, Tokukai, No. 2003-93926. DE 102009034072 A1 relates to an injection nozzle for supplying reducing agent. US 10473013B2 relates to a selective catalytic reduction system. US9995194B2 relates to a system for preventing the urea crystal formation. US2012/317963A1 relates to a reducing agent injection nozzle. DE 102009005528 A1 relates to a two-substance nozzle for atomizing a liquid.

### Summary of Invention

### Technical Problem

The inventors have found that it is important, for a method of efficiently hydrolyzing an aqueous urea solution into NH₃, to evenly spray an aqueous urea solution on a certain cross-sectional surface of a spray target object, which is a catalyst. The inventors tried to achieve such spraying by using the nozzle as described above.

However, when three or more spraying parts are provided in the nozzle as described above, the amount of liquid adhering to a spray target surface can vary from position to position. Therefore, there still remains room for improvement in evenness of an adhesion amount of a liquid sprayed on a spray target object by using a conventional nozzle.

It is an object of an aspect of the present invention to improve evenness of an adhesion amount of a liquid sprayed on a spray target object by using a nozzle including three or more spraying parts.

### Solution to Problem

In order to solve the above problem, provided is a nozzle in accordance with an aspect of the present invention including the features of claim 1.

### Advantageous Effects of Invention

An aspect of the present invention enables an improvement in evenness of an adhesion amount of a liquid sprayed on a spray target object by using a nozzle including three or more spraying parts.

### Brief Description of Drawings

Fig. 1 is a view schematically illustrating a configuration of a hydrolyzing device, including a container, in accordance with Embodiment 1 of the present invention.
Fig. 2 is a view schematically illustrating a nozzle of the container.
Fig. 3 is a cross-sectional view of a section taken along line A-A' of the nozzle illustrated in Fig. 2.
Fig. 4 is a view schematically illustrating an internal structure of a spraying part of the nozzle.
Fig. 5 is a view illustrating a spray target surface on which a liquid has been sprayed by using the nozzle.
Fig. 6 is a view schematically illustrating a nozzle in accordance with Embodiment 2 of the present invention.
Fig. 7 is a cross-sectional view of a section taken along line B-B' of the nozzle illustrated in Fig. 6.
Fig. 8 is a view illustrating a spray target surface on which a liquid has been sprayed by using the nozzle.

### Description of Embodiments

### Embodiment 1

### <Configuration of hydrolyzing device 100 >

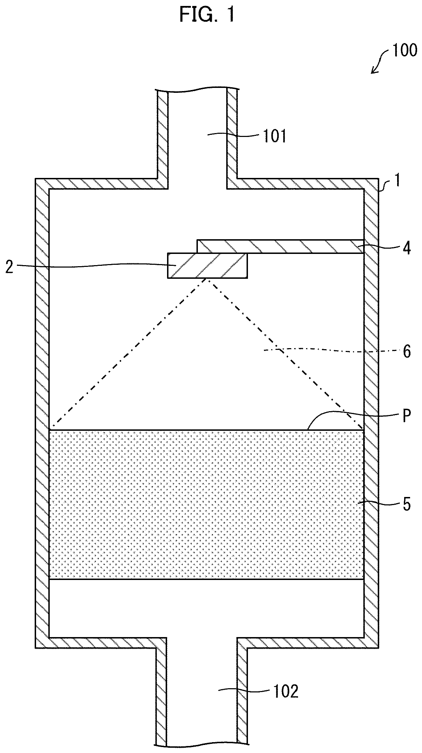

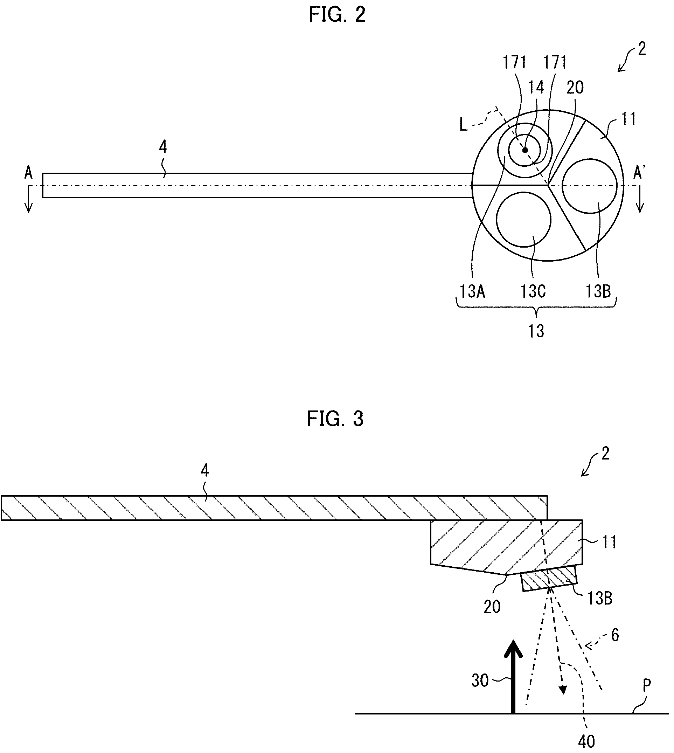

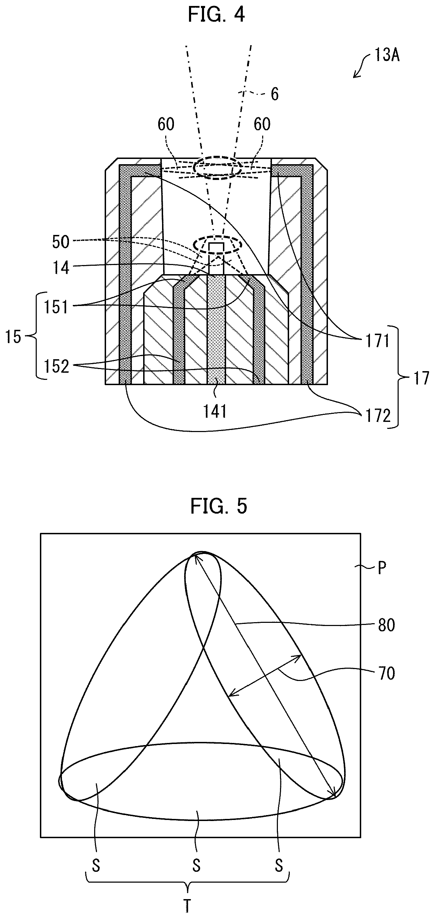

The following description will discuss an embodiment of the present invention with reference to Figs. 1 to 5 in detail. Fig. 1 is a view schematically illustrating a configuration of a hydrolyzing device 100, including a container 1, in accordance with Embodiment 1 of the present invention. Fig. 2 is a view schematically illustrating a nozzle 2 of the container 1. Fig. 3 is a cross-sectional view of a section taken along line A-A' of the nozzle 2 illustrated in Fig. 2. Fig. 4 is a cross-sectional view illustrating an internal structure of a spraying part 13 of the nozzle 2. Fig. 5 is a view illustrating how a liquid 6 adheres to a spray target surface P on which the liquid 6 has been sprayed by using the nozzle 2.

The hydrolyzing device 100 in accordance with Embodiment 1 is a device for cleaning emissions by supplying a denitration catalyst with a gas containing ammonia (NH₃) and decomposing nitrogen oxides contained in the emissions into nitrogen and water through a selective catalytic reduction (SCR) reaction using, as a reducing agent, the ammonia. As illustrated in Fig. 1, the hydrolyzing device 100 includes the container 1, a bleed air line 101, a treatment gas line 102, and a heater (not illustrated).

The heater heats a bleed air of exhaust from an engine such as a diesel engine. The bleed air having been heated is supplied to the container 1 through the bleed air line 101.

The container 1 is a device for hydrolyzing the liquid 6 inside the container 1 to generate ammonia. For example, the liquid 6 is an aqueous urea solution. The container 1 stores a spray target object 5, which is a catalyst for accelerating a hydrolysis reaction. The container 1 includes the nozzle 2 for spraying the spray target object 5 with the liquid 6. The container 1 further includes a pipe 4 for supporting the nozzle 2 and supplying the nozzle 2 with the liquid 6. The nozzle 2 is supplied with the liquid 6 through the pipe 4.

The nozzle 2 sprays the spray target object 5 with the liquid 6. The liquid 6 having been sprayed is hydrolyzed by a hot gas (bleed air) introduced into the container 1 to form ammonia.

The container 1 has a shape that include, as a specific example, the shape of an axially long tube, such as the shape of a rectangular tube that is substantially square in a cross section perpendicular to an extending direction thereof. However, the container 1 is not limited to the shape of a rectangular tube, but may be cylindrical. The container 1 supplies, through the treatment gas line 102, a hot treatment gas into which ammonia has been mixed.

### <Configuration of nozzle 2>

The nozzle 2, which is provided in the container 1, is a liquid spray nozzle for spraying (misting) the liquid 6 in the form of mist, over a spray target surface P of the spray target object 5. As illustrated in Figs. 2 and 3, the nozzle 2 includes: a nozzle body 11 connected to the pipe 4; and at least three spraying parts 13 for spraying the liquid 6. Described as an example in Embodiment 1 is a case where the nozzle body 11 includes, as a spraying part 13, three spraying parts: a spraying part 13A; a spraying part 13B; and a spraying part 13C.

The spraying parts 13A to 13C have the same structure. Therefore, in the following description, only the structure of the spraying part 13A is described and the descriptions of the structures of the spraying part 13B and the spraying part 13C will be omitted. Fig. 4 is a cross-sectional view illustrating the structure of the spraying part 13A of the nozzle 2. As illustrated in Fig. 4, the spraying part 13A includes: a liquid spray hole 14; a gas supply portion 15; and gas ejecting parts 17 (route control part) paired together. The liquid spray hole 14 is a circular opening provided in the spraying part 13. The liquid spray hole 14 is connected to a liquid passage 141 inside the pipe 4, and sprays the liquid 6 carried by the liquid passage 141.

The gas supply portion 15 includes: gas spray holes 151 serving as spray holes; and gas passages 152. The gas spray holes 151 are a pair of openings located near the liquid spray hole 14. The gas passages 152 are connected to a gas passage inside the pipe 4. The gas passages 152 supply a gas 50 carried by the gas passage to the gas spray holes 151, which spray the gas 50 toward the liquid 6 sprayed from the spraying part 13. This makes the particle diameter of the liquid 6 sprayed from the liquid spray hole 14 smaller, so that the liquid 6 becomes misty.

The gas ejecting parts 17 are a mechanism for controlling a region (hereinafter, referred to also as adhesion region) formed through adhesion, to the spray target surface P, of the liquid 6 sprayed from the spraying part 13. Note that the spray target surface P is a flat surface substantially perpendicular to a direction in which the nozzle body 11 is viewed in a plan view.

The gas ejecting parts 17 control a route of a liquid sprayed from the liquid spray hole 14 by blowing a gas toward the liquid sprayed from the liquid spray hole 14. The gas ejecting parts 17 include: gas spray holes 171; and gas passages 172. Each of the gas ejecting parts 17 paired together includes corresponding one of the gas spray holes 171.

The gas spray holes 171 are a pair of openings provided near the end of the spraying part 13A, on a straight line L (a straight line denoted by a sign L in Fig. 2) connecting a center point 20 (see Fig. 2) of the nozzle body 11 and the spraying part 13A. As illustrated in Fig. 2, the gas spray holes 171 paired together are disposed such that the liquid spray hole 14 is placed therebetween on the straight line L. In other words, the gas spray holes 171 paired together are provided in an outer circumferential part of the spraying part 13A and also on a straight line L passing through the center of the nozzle body 11 and the liquid spray hole 14.

The gas passages 172 are connected to another gas passage that is different from the gas passage connected to the gas passages 152 and that is provided inside the pipe 4. The gas passages 172 supply the gas spray holes 171 with a gas 60 carried by the other gas passage. It should be noted that the gas passages 172 and the gas passages 152 can be connected to the same gas passage provided inside the pipe 4. In such a case, the gas spray holes 171 and the gas spray holes 151 are supplied with the gas 50 carried by the same gas passage.

The gas spray holes 171 spray, with the gas 60 supplied by the gas passages 172, the liquid 6 that have been sprayed and have become misty. Note that the gas 50 and the gas 60 sprayed from the gas spray holes 151 and the gas passage 17, respectively are not limited to any particular types. The gas 50 and the gas 60 may be, for example, air.

The three spraying parts 13 are disposed so as not to be located in line with each other when seen from a third direction (a direction represented by an arrow 30 in Fig. 3) that is perpendicular to the spray target surface P. Specifically, the three spraying parts 13 are disposed on the circumference of the same circle having a center which is the center point 20 (a position represented by a dot 20 in Fig. 2), which is the center of the nozzle body 11, when seen from the third direction (in other words, in the plan view, from a position where the three spraying parts 13 are disposed, of the nozzle body 11).

The three spraying parts 13 are disposed so as to be spaced at regular intervals. In other words, the three spraying parts 13 are disposed so as to form a regular triangle when seen from the third direction. Further, the three spraying parts 13 are disposed so as to be inclined with respect to a plane perpendicular to the third direction, so that, when seen from the third direction, the liquid is sprayed in directions from the center point 20 of the nozzle body 11 to the spraying parts 13 (for example, the direction represented by an arrow 40 in a case of the spraying part 13B in Fig. 3).

### <Effect of nozzle 2>

According to the nozzle 2 of Embodiment 1, with the pressure of the gas 60 sprayed by the gas spray holes 171 of the gas ejecting parts 17, the liquid 6 sprayed from the liquid spray hole 14 is deformed to be flattened (oval) as a whole, so as to be shorter in a direction in which the gas spray holes 171 face each other and longer in a direction perpendicular to the direction in which the gas spray holes 171 face each other. This means the gas ejecting parts 17 control a route of the liquid such that an adhesion region S is shorter in a first direction outward from a central part of a group of the plurality of adhesion regions S than in a second direction perpendicular to the first direction.

The configuration described above makes flattened (oval) the adhesion region S (a region denoted by a sign S in Fig. 5) of the liquid 6 that is sprayed from each of the spraying parts 13 and then adheres to the spray target surface P, as illustrated in Fig. 5. In other words, the adhesion region S is shorter in a first direction (a direction represented by an arrow 70 in Fig. 5) outward from the center (center point 20) of the nozzle body 11 than in a second direction (a direction represented by an arrow 80 in Fig. 5) perpendicular to the first direction.

As illustrated in Fig. 5, a region T (referred to as an adhesion region T) is a group of the adhesion regions S, in which the liquid having been sprayed from the three spraying parts 13 adheres to the spray target surface P. In the region T, an end part of one adhesion region S (a region denoted by S in Fig. 5) produced by one of the spraying parts 13 overlaps an end part of another adhesion region S produced by another one of the spraying parts 13. The gas ejecting parts 17 control the route of the liquid such that the adhesion region S is shorter in the first direction outward from the central part of the adhesion region T than in the second direction perpendicular to the first direction.

Since the spray region S generated by a single spraying part 13 is flattened, an adhesion amount of the liquid 6 is likely to be reduced, in particular, in end parts thereof in a longitudinal direction. However, according to the nozzle 2, the three spraying parts 13 generate the spray regions S each having end parts that overlap end parts of the other spray regions S. This reduces variation in the adhesion amount of the liquid 6 within the spray region T.

Each of the spraying parts 13 is inclined outward from the nozzle body 11. The spraying parts 13 therefore spray the liquid 6 in a direction outward from the nozzle body 11. This reduces the variation in the adhesion amount of the liquid 6 within the adhesion region S more than in a case where the spraying parts 13 point in the third direction.

In a case where the spraying parts 13 face, in the third direction, the spray target object 5 that has a honeycomb structure, the liquid 6 sprayed from the spraying parts 13 is mostly sprayed substantially in the third direction. In this case, the liquid 6 mostly passes through the inside of the honeycomb structure of a catalyst, which is the spray target object 5, without touching the inner wall surface of the honeycomb structure. This could reduce the efficiency of a catalyzed reaction.

In contrast, according to the nozzle 2 in accordance with Embodiment 1, each of the spraying parts 13 is inclined outward from the nozzle body 11. This causes the liquid 6 sprayed from the spraying parts 13 to be sprayed in a direction inclined with respect to the third direction. Accordingly, the liquid 6 mostly touches the inner wall surface of the honeycomb structure of the spray target object 5. This improves the efficiency of the catalyzed reaction.

In the spraying parts 13, the flattened shape is adjusted by means of wind pressure of a gas jetted from the gas spray holes 171. This enables adaptation by changing the wind pressure without changing the structure of the spraying parts 13, even in a case where a condition such as the size of the spray target surface P is changed.

The route control part described in Embodiment 1 has the configuration that involves the gas ejecting parts 17. However, a method for controlling the shape of the adhesion region S is not limited to this. For example, the route control part may be a liquid spray hole 14 that is deformed to be flattened so that the adhesion region S is adjusted to be flattened.

### Embodiment 2

### <Configuration of nozzle 2A>

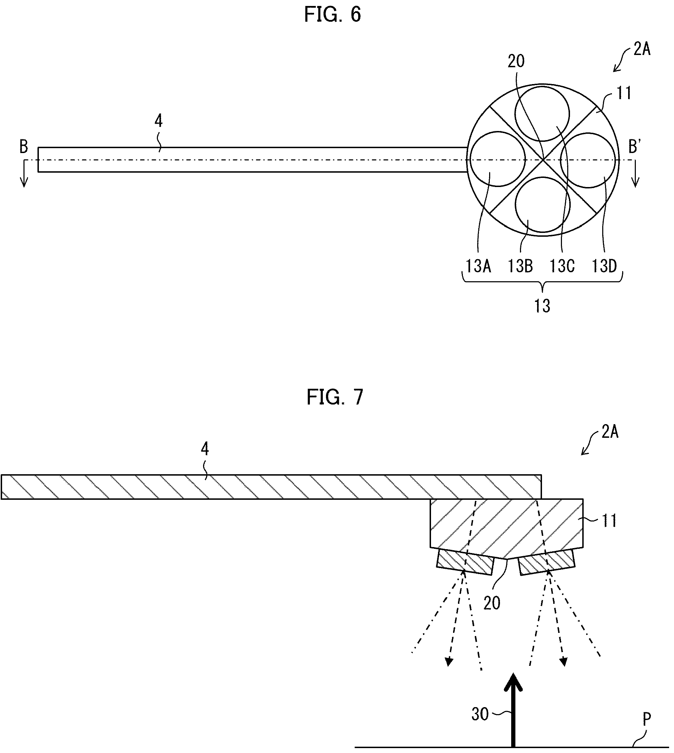

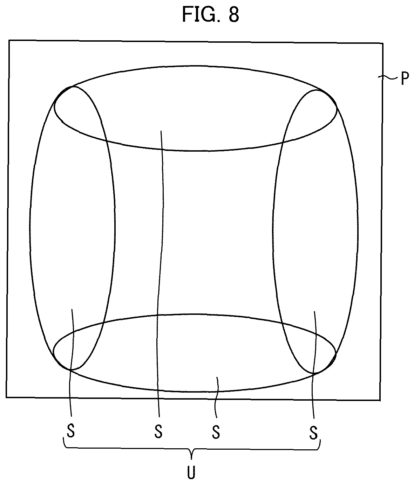

The following description will discuss another embodiment of the present invention with reference to Figs. 6 to 8. For the convenience of description, a member having the same function as the member already described in Embodiment 1 is assigned with the same reference sign, and the description thereof is omitted. Fig. 6 is a view schematically illustrating a nozzle 2A in accordance with Embodiment 2 of the present invention. Fig. 7 is a cross-sectional view of a section taken along line B-B' of the nozzle 2A illustrated in Fig. 6. Fig. 8 is a view illustrating a spray target surface P on which a liquid 6 has been sprayed by using the nozzle 2A.

As illustrated in Figs. 6 and 7, the nozzle 2A in accordance with Embodiment 2 of the present invention includes, as a spraying part 13, four spraying parts: spraying parts 13A, 13B, 13C, and 13D. The four spraying part 13A to 13D are disposed so as not to be located in line with each other when viewed from a third direction perpendicular to the spray target surface P. Specifically, the four spraying parts 13 are disposed on the circumference of the same circle having a center which is a center point 20 of a nozzle body 11 when seen from the third direction.

The four spraying parts 13 are disposed so as to be spaced at regular intervals. In other words, the four spraying parts 13 are disposed so as to form a regular triangle when seen from the third direction. Further, the four spraying parts 13 are disposed so as to be inclined with respect to a plane perpendicular to the third direction, so that, when seen from the third direction, the liquid is sprayed in directions from the center point 20 of the nozzle body 11 to the spraying parts 13.

### <Effect of nozzle 2A>

As illustrated in Fig. 8, using the nozzle 2A generates an adhesion region U of the liquid 6 (a region denoted by a sign U in Fig. 8) that is formed by four adhesion regions S. Accordingly, the adhesion region U is larger than the adhesion region T generated by using the nozzle 2. This is because the nozzle 2A includes the four spraying parts 13A to 13D. With the above configuration, the nozzle 2A enables both a reduction in the variation in an adhesion amount of the liquid 6 within the adhesion region T, as with the case of the nozzle 2, and spray of the liquid 6 in the spray region P over a larger range.

### Reference Signs List

2, 2A: Nozzle
5: Spray target object
6: Liquid
11: Nozzle body
13, 13A, 13B, 13C, 13D: Spraying part
14: Liquid spray hole (spray hole)
17: Gas ejecting part (route control part)
P: Spray target surface

## Claims

1. A nozzle comprising:
a nozzle body (11); and
at least three spraying parts (13, 13A, 13B, 13C, 13D) provided in the nozzle body (11) and for spraying a liquid (6) on a spray target surface (P), wherein the liquid (6) is an aqueous urea solution (6),
the at least three spraying parts (13, 13A, 13B, 13C, 13D) being disposed so as not to be in line with each other in a plan view, from a position where the at least three spraying parts (13, 13A, 13B, 13C, 13D) are disposed, of the nozzle body (11),
the at least three spraying parts (13, 13A, 13B, 13C, 13D) each including:
a spray hole (14) through which the liquid (6) is sprayed outward from the nozzle body (11); and
a route control part (17) for controlling a route of the liquid (6) sprayed from the spray hole (14),
wherein the nozzle (2, 2A) comprises, as the route control part (17), gas ejecting parts (17) paired together for blowing a gas toward the liquid (6) sprayed from the spray hole (14),
the liquid (6) sprayed from the spray hole (14) adhering to the spray target surface (P) to form an adhesion region (S), and
the route control part (17) controlling the route of the liquid (6) such that the adhesion region (S) is shorter in a first direction (70) outward from a central part of a group of a plurality of adhesion regions (S), the plurality of adhesion regions (S) each being the adhesion region (S), than in a second direction (80) perpendicular to the first direction (70).

2. The nozzle according to claim 1, wherein the gas ejecting parts (17) paired together each include a gas spray hole (171) for spraying the gas, and
the gas spray hole (171) is provided in an outer circumferential part of a corresponding one of the at least three spraying parts (13, 13A, 13B, 13C, 13D) and on a straight line passing through the center of the nozzle body (11) and the spray hole (14).

3. The nozzle according to any one of claims 1 to 2, wherein the at least three spraying parts (13, 13A, 13B, 13C, 13D) are spaced at regular intervals on the circumference of the same circle having a center that is the center of the nozzle body (11).

4. A hydrolyzing device comprising:
a container (1) for storing a catalyst for accelerating a hydrolysis reaction;
a nozzle (2, 2A) according to any one of claims 1 to 3 provided inside the container and for spraying the catalyst with the aqueous urea solution (6); and
a pipe (4) for supplying the nozzle (2, 2A) with the aqueous urea solution (6).

## Patentansprüche

1. Düse, die umfasst:
einen Düsenkörper (11); sowie
wenigstens drei Sprühteile (13, 13A, 13B, 13C, 13D), die in dem Düsenkörper (11) vorhanden sind und zum Sprühen einer Flüssigkeit (6) auf eine Sprüh-Zielfläche (P) dienen, wobei die Flüssigkeit (6) eine wässrige Harnstofflösung (6) ist,
wobei die wenigstens drei Sprühteile (13, 13A, 13B, 13C, 13D) so angeordnet sind, dass sie in einer Draufsicht auf den Düsenkörper (11) von einer Position aus, an der die wenigstens drei Sprühteile (13, 13A, 13B, 13C, 13D) angeordnet sind, nicht miteinander fluchten, und
die wenigstens drei Sprühteile (13, 13A, 13B, 13C, 13D) jeweils enthalten:
eine Sprühöffnung (14), über die die Flüssigkeit (6) aus dem Düsenkörper (11) nach außen gesprüht wird; und
einen Weg-Steuerungsteil (17) zum Steuern eines Weges der über die Sprühöffnung (14) gesprühten Flüssigkeit (6),
wobei die Düse (2, 2A) als den Weg-Steuerungsteil (17) Gas-Ausstoßteile (17) umfasst, die miteinander gepaart sind, um ein Gas in Richtung der über die Sprühöffnung (14) gesprühten Flüssigkeit (6) zu blasen,
die über die Sprühöffnung (14) gesprühte Flüssigkeit (6) an der Sprüh-Zielfläche (P) haftet und einen Haftbereich (S) bildet, und
der Weg-Steuerungsteil (17) den Weg der Flüssigkeit (6) so steuert, dass der Haftbereich (S) in einer ersten Richtung (70) von einem mittleren Teil einer Gruppe einer Vielzahl von Haftbereichen (S) kürzer ist als in einer zweiten Richtung (80) senkrecht zu der ersten Richtung (70), wobei die Vielzahl von Haftbereichen (S) jeweils der Haftbereich (S) sind.

2. Düse nach Anspruch 1, wobei die miteinander gepaarten Gas-Ausstoßteile (17) jeweils eine Gas-Sprühöffnung (171) zum Sprühen des Gases enthalten, und
die Gas-Sprühöffnung (171) in einem Außenumfangsteil eines entsprechenden der wenigstens drei Sprühteile (13, 13A, 13B, 13C, 13D) sowie auf einer geraden Linie vorhanden ist, die durch die Mitte des Düsenkörpers (11) und der Sprühöffnung (14) verläuft.

3. Düse nach einem der Ansprüche 1 bis 2, wobei die wenigstens drei Sprühteile (13, 13A, 13B, 13C, 13D) in gleichmäßigen Abständen an dem Umfang des gleichen Kreises angeordnet sind, dessen Mittelpunkt der Mittelpunkt des Düsenkörpers (11) ist.

4. Hydrolysierungs-Vorrichtung, die umfasst:
einen Behälter (1) zum Speichern eines Katalysators zum Beschleunigen einer Hydrolyse-Reaktion;
eine Düse (2, 2A) nach einem der Ansprüche 1 bis 3, die im Inneren des Behälters vorhanden ist und zum Sprühen des Katalysators mit der wässrigen Harnstofflösung (6) dient; sowie
eine Rohrleitung (4) zum Speisen der Düse (2, 2A) mit der wässrigen Harnstofflösung (6).

## Revendications

1. Buse comprenant :
un corps de buse (11) ; et
au moins trois parties de pulvérisation (13, 13A, 13B, 13C, 13D) prévues dans le corps de buse (11) et destinées à pulvériser un liquide (6) sur une surface cible de pulvérisation (P), où le liquide (6) est une solution aqueuse d'urée (6),
les au moins trois parties de pulvérisation (13, 13A, 13B, 13C, 13D) étant disposées de manière à ne pas être alignées les unes avec les autres dans une vue en plan, à partir d'une position où les au moins trois parties de pulvérisation (13, 13A, 13B, 13C, 13D) sont disposées, du corps de buse (11),
les au moins trois parties de pulvérisation (13, 13A, 13B, 13C, 13D) comprenant chacune :
un trou de pulvérisation (14) à travers lequel le liquide (6) est pulvérisé vers l'extérieur depuis le corps de buse (11) ; et
une partie de commande d'itinéraire (17) pour commander un itinéraire du liquide (6) pulvérisé depuis le trou de pulvérisation (14),
dans laquelle la buse (2, 2A) comprend, comme étant la partie de commande d'itinéraire (17), des parties d'éjection de gaz (17) appariées pour souffler un gaz vers le liquide (6) pulvérisé depuis le trou de pulvérisation (14),
le liquide (6) pulvérisé depuis le trou de pulvérisation (14) adhérant à la surface cible de pulvérisation (P) pour former une région d'adhésion (S), et
la partie de commande d'itinéraire (17) commandant l'itinéraire du liquide (6) de sorte que la région d'adhésion (S) soit plus courte dans une première direction (70) vers l'extérieur à partir d'une partie centrale d'un groupe d'une pluralité de régions d'adhésion (S), la pluralité de régions d'adhésion (S) étant chacune la région d'adhésion (S), que dans une seconde direction (80) perpendiculaire à la première direction (70).

2. Buse selon la revendication 1, dans laquelle les parties d'éjection de gaz (17) appariées comprennent chacune un trou de pulvérisation de gaz (171) pour pulvériser le gaz, et
le trou de pulvérisation de gaz (171) est prévu dans une partie circonférentielle externe d'une partie correspondante des au moins trois parties de pulvérisation (13, 13A, 13B, 13C, 13D) et sur une ligne droite passant par le centre du corps de buse (11) et le trou de pulvérisation (14).

3. Buse selon l'une quelconque des revendications 1 et 2, dans laquelle les au moins trois parties de pulvérisation (13, 13A, 13B, 13C, 13D) sont espacées à intervalles réguliers sur la circonférence d'un même cercle ayant un centre qui est le centre du corps de buse (11).

4. Dispositif d'hydrolyse comprenant :
un récipient (1) pour stocker un catalyseur permettant d'accélérer une réaction d'hydrolyse ;
une buse (2, 2A) selon l'une quelconque des revendications 1 à 3 prévue à l'intérieur du récipient et permettant de pulvériser le catalyseur avec la solution aqueuse d'urée (6) ; et
un tuyau (4) pour alimenter la buse (2, 2A) en solution aqueuse d'urée (6).
